(19) Europäisches Patentamt
European Patent Office
Office européen des brevets

(11) **EP 4 199 340 A1**

(12) **EUROPÄISCHE PATENTANMELDUNG**

(43) Veröffentlichungstag:
**21.06.2023 Patentblatt 2023/25**

(21) Anmeldenummer: **22206605.2**

(22) Anmeldetag: **10.11.2022**

(51) Internationale Patentklassifikation (IPC):
***H02P 5/68*** *(2006.01)*

(52) Gemeinsame Patentklassifikation (CPC):
**H02P 5/68**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **14.12.2021 DE 102021132938**

(71) Anmelder: **Miele & Cie. KG**
**33332 Gütersloh (DE)**

(72) Erfinder:
• **Sammoud, Hafedh**
  **8090 Kelibia (TN)**
• **Schaefer-van den Boom, Klaus**
  **53489 Sinzig (DE)**
• **Rech, Thomas**
  **53881 Euskirchen (DE)**
• **Kiefer, Andreas**
  **53125 Bonn (DE)**
• **Neufeld, Alexander**
  **33619 Bielefeld (DE)**

(54) **ANTRIEBSSYSTEM**

(57) Die Erfindung betrifft ein Antriebssystem (1) mit wenigstens einem ersten Motor (M1), mit wenigstens einer ersten H-Brücke (15), welche ausgebildet ist, den ersten Motor (M1) zu betreiben, mit wenigstens einem zweiten Motor (M2) und mit wenigstens einer zweiten H-Brücke (16), welche ausgebildet ist, den zweiten Motor (M2) zu betreiben, wobei die erste H-Brücke (15) eine erste Halbbrücke (12) und eine zweite Halbbrücke (13) aufweist, und wobei die zweite H-Brücke (16) die zweite Halbbrücke (13) und eine dritte Halbbrücke (14) aufweist. Das Antriebssystem (1) ist dadurch gekennzeichnet, dass das Antriebssystem (1), vorzugweise eine Steuerungseinheit (17) des Antriebssystems (1), ausgebildet ist, gleichzeitig mittels der ersten Halbbrücke (12) und der zweiten Halbbrücke (13) die erste H-Brücke (15) und mittels der zweiten Halbbrücke (13) und der dritten Halbbrücke (14) die zweite H-Brücke (16) zu betreiben.

FIG. 2

**Beschreibung**

Die Erfindung betrifft ein Antriebssystem sowie ein Haushaltsgerät mit einem derartigen Antriebssystem.

Zu den elektrischen Motoren gehören die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und die Amplitude der Ausgangswechselspannung des Frequenzumrichters vorgegeben werden. Dies kann das Drehverhalten des Synchronmotors z.B. beim Anlauf sowie in Abhängigkeit der anzutreibenden Last gezielt beeinflussen.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen einzusetzen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Werden in einem Gerät mehrere derartige Einphasen-Synchronmotoren verwendet, beispielsweise in einer Waschmaschine ein erster Einphasen-Synchronmotor für die Umflutpumpe und ein zweiter Einphasen-Synchronmotor für die Laugenpumpe, so ist auch jeweils eine H-Brücke und eine Steuerungseinheit pro Einphasen-Synchronmotor erforderlich. Entsprechend können die zusätzlichen H-Brücken die Herstellungskosten hinsichtlich Material und Montageaufwand, den Platzbedarf im Gerät bzw. auf der Elektronik, den Stromverbrauch und bzw. oder die erzeugte Abwärme erhöhen.

Die EP 2 744 095 A1 betrifft einen Frequenzumrichter zum Betreiben eines elektrischen Motors, umfassend eine Wandlereinrichtung zum Wandeln der dem Frequenzumrichter zugeführten Eingangsspannung in eine Gleichspannung und einem Bezugspotential in einem Zwischenkreis, einen Wechselrichter mit gesteuerten Halbbrücken, zum Ein- und Ausschalten der Stromzufuhr für zumindest eine Wicklung eines einphasigen oder mehrphasigen elektrischen Motors, und eine Steuereinrichtung zum Ansteuern der Halbbrücken. Die Wandlereinrichtung ist ferner dazu eingerichtet, eine weitere Gleichspannung für den Zwischenkreis bereitzustellen, die im Bereich zwischen der Zwischenkreisgleichspannung und dem Bezugspotential liegt, wobei zumindest eine Wicklung mit einem Ende an der weiteren Gleichspannung angeschlossen ist.

Die DE 102017 112 485 A1 betrifft ein Verfahren zum Betrieb eines 1-Phasen-Synchronmotors an einer Netzwechselspannung mit vorgegebener Frequenz, umfassend Ausrichten des Rotors durch Gleichstrom, überlagerten Gleichstrom oder einen oder mehrere Gleichspannungspulse; Anlaufen des Motors durch Anlegen einer Wechselspannung, die eine andere Frequenz als die Netzwechselspannung und optional eine andere Amplitude als die Netzwechselspannung aufweist; und Hochlaufen des Motors auf eine Betriebsfrequenz durch Erhöhen der Frequenz und optional der Amplitude der angelegten Wechselspannung; wobei die angelegte Wechselspannung mit einem Frequenzumrichter durch Modulation aus der gleichgerichteten Netzwechselspannung erzeugt wird.

Der Erfindung stellt sich somit das Problem, ein Antriebssystem der eingangs beschriebenen Art bereitzustellen, welches mehrere, insbesondere einphasige, Wechselstrommotoren mit einem geringeren elektronischen bzw. schaltungstechnischen Aufwand als bisher bekannt betreiben kann. Dies soll insbesondere kostengünstiger, bauraumsparender, energiesparender und bzw. oder mit einer geringeren Abwärme erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem ersten Motor, mit wenigstens einer ersten H-Brücke, welche ausgebildet ist, den ersten Motor zu betreiben, mit wenigstens einem zweiten Motor und mit wenigstens einer zweiten H-Brücke, welche ausgebildet ist, den zweiten Motor zu betreiben, wobei die erste H-Brücke eine erste Halbbrücke und eine zweite Halbbrücke aufweist und wobei die zweite H-Brücke die zweite Halbbrücke und eine dritte Halbbrücke aufweist.

Das erfindungsgemäße Antriebssystem ist dadurch gekennzeichnet, dass das Antriebssystem, vorzugweise eine Steuerungseinheit des Antriebssystems, ausgebildet ist, gleichzeitig mittels der ersten Halbbrücke und der zweiten Halbbrücke die erste H-Brücke und mittels der zweiten Halbbrücke und der dritten Halbbrücke die zweite H-Brücke zu betreiben.

Mit anderen Worten wird die zweite Halbbrücke sowohl als Bestandteil bzw. als Komponente der ersten H-Brücke verwendet, um den ersten Motor zu betreiben, als auch als Bestandteil bzw. als Komponente der zweiten H-Brücke, um den zweiten Motor zu betreiben. Dies kann entsprechend den schaltungstechnischen Aufwand reduzieren, um zwei Motoren betreiben zu können, da die zweite Halbbrücke sozusagen doppelt verwendet werden kann. Dies kann die Kosten hinsichtlich Material und Montage ebenso reduzieren wie den Platzbedarf, den Energieverbrauch und bzw. oder die Wärmeerzeugung.

Dabei ferner die zweite Halbbrücke gleichzeitig zu betreiben, um beide H-Brücken gleichzeitig zu verwenden und somit beide Motoren parallel zueinander zu betreiben, kann die Nutzungsmöglichkeiten erweitern bzw. die Nutzungsmöglichkeiten erhalten, wie sie von zwei Motoren mit einzelnen, d.h. unabhängigen, H-Brücken bekannt sind.

Gemäß einem Aspekt der Erfindung ist das Antriebssystem, vorzugweise eine Steuerungseinheit des Antriebssystems, ausgebildet, die zweite Halbbrücke mit einer Spannung zu betreiben, welche zwischen 25% und 75%, vorzugsweise etwa 50%, der an der zweiten Halbbrücke anliegenden Zwischenkreisspannung entspricht. Mit anderen Worten kann seitens der zweiten Halbbrücke beiden H-Brücken gleichzeitig dieselbe Spannung zur Verfügung gestellt werden, welche einem prozentualen Anteil der Zwischenkreisspannung entspricht, welche über der zweiten Halbbrücke anliegt. Hierdurch kann beiden H-Brücken diese Spannung des gemeinsamen Strangs bzw. der gemeinsamen Phase zur Verfügung gestellt werden.

Gemäß einem weiteren Aspekt der Erfindung ist das Antriebssystem, vorzugweise eine Steuerungseinheit des Antriebssystems, ausgebildet, die erste Halbbrücke und bzw. oder die dritte Halbbrücke, vorzugsweise pulsweitenmoduliert, mit einer Spannung zu betreiben, welche sich von der Spannung der zweiten Halbbrücke unterscheidet. Somit kann beiden H-Brücken die Spannung des gemeinsamen Strangs bzw. der gemeinsamen Phase zur Verfügung gestellt werden, um durch die Spannung des jeweiligen alleinigen Strangs bzw. der jeweiligen alleinigen Phase jeder H-Brücke den jeweiligen Motor individuell betreiben zu können. Entsprechend können die beiden Motoren trotz gemeinsam genutzter zweiter Halbbrücke mit unterschiedlichen Drehzahlen und, bzw. oder mit unterschiedlichen Drehmomenten betrieben werden.

Gemäß einem weiteren Aspekt der Erfindung ist das Antriebssystem, vorzugweise eine Steuerungseinheit des Antriebssystems, ausgebildet, die erste H-Brücke und die zweite H-Brücke pulsweitenmoduliert zu betreiben, wobei das Antriebssystem, vorzugweise die Steuerungseinheit des Antriebssystems, ferner ausgebildet ist, die zweite Halbbrücke mit einem Tastgrad zwischen 25% und 75%, vorzugsweise von etwa 50%, zu betreiben. Hierdurch können die entsprechenden zuvor beschriebenen Aspekte mittels einer Pulsweitenmodulation (PWM) konkret umgesetzt werden.

Gemäß einem weiteren Aspekt der Erfindung ist das Antriebssystem, vorzugweise eine Steuerungseinheit des Antriebssystems, ausgebildet, die erste Halbbrücke und bzw. oder die dritte Halbbrücke, vorzugsweise pulsweitenmoduliert, mit einer Spannung zu betreiben, welche unterhalb oder oberhalb der Spannung der zweiten Halbbrücke liegt. Dies kann eine konkrete Möglichkeit zur Umsetzung der entsprechenden zuvor beschriebenen Aspekte sein.

Gemäß einem weiteren Aspekt der Erfindung ist das Antriebssystem, vorzugweise eine Steuerungseinheit des Antriebssystems, ausgebildet, die erste H-Brücke und die zweite H-Brücke pulsweitenmoduliert zu betreiben, wobei das Antriebssystem, vorzugweise die Steuerungseinheit des Antriebssystems, ferner ausgebildet ist, die zweite Halbbrücke mit einem Tastgrad zu betreiben, so dass die zweite Halbbrücke der ersten H-Brücke und der zweiten H-Brücke die gleiche Spannung zur Verfügung stellt. Hierdurch kann eine symmetrische Spannungsaufteilung zwischen den beiden Motoren erfolgen.

Gemäß einem weiteren Aspekt der Erfindung ist das Antriebssystem, vorzugweise eine Steuerungseinheit des Antriebssystems, ausgebildet, die erste H-Brücke und die zweite H-Brücke pulsweitenmoduliert zu betreiben, wobei das Antriebssystem, vorzugweise die Steuerungseinheit des Antriebssystems, ferner ausgebildet ist, die zweite Halbbrücke mit einem Tastgrad zu betreiben, so dass die zweite Halbbrücke der ersten H-Brücke und der zweiten H-Brücke zwei unterschiedliche Spannungen zur Verfügung stellt. Hierdurch kann eine unsymmetrische Spannungsaufteilung zwischen den beiden Motoren erfolgen.

Gemäß einem weiteren Aspekt der Erfindung ist das Antriebssystem, vorzugweise eine Steuerungseinheit des Antriebssystems, ferner ausgebildet, entweder mittels der ersten Halbbrücke und der zweiten Halbbrücke die erste H-Brücke oder mittels der zweiten Halbbrücke und der dritten Halbbrücke die zweite H-Brücke zu betreiben. Hierdurch können die beiden Motoren auch alternativ zueinander alleinig, d.h. sequenziell, betrieben werden.

Gemäß einem Aspekt der Erfindung weist das Antriebssystem eine Steuerungseinheit auf, welche ausgebildet ist, die erste Halbbrücke, die zweite Halbbrücke und die dritte Halbbrücke zu betreiben. Somit kann auch hinsichtlich der Umsetzung der Steuerung der Halbbrücken bzw. der H-Brücken der Aufwand etc. reduziert werden, indem alle drei Halbbrücken von einer gemeinsamen Steuerungseinheit betrieben bzw. gesteuert werden können.

Gemäß einem weiteren Aspekt der Erfindung weist das Antriebssystem einen Gleichrichter auf, welcher ausgebildet ist, eine Wechselspannung eines Spannungseingangs des Antriebssystems zu erhalten und eine Gleichspannung der ersten Halbbrücke, der zweiten Halbbrücke und der dritten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Gemäß einem weiteren Aspekt der Erfindung sind der erste Motor und der zweite Motor einphasige Wechselstrommotoren, vorzugsweise einphasige Synchronmotoren, vorzugsweise einphasige permanenterregte Synchronmotoren. Dies kann die Umsetzung des Antriebssystems mit derartigen Motoren ermöglichen.

Die vorliegende Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

Mit anderen Worten kann erfindungsgemäß eine gemeinsam genutzte Phase (im Beispiel Phase V) eines Antriebssystems wie beispielsweise eines Wechselrichters mit einem gemeinsamen Tastgrad wie z.B. 50% getaktet werden, sodass das gemittelte Phasenpotential in etwa der halben Zwischenkreisspannung entspricht. Auch andere Tastgrade, die den momentanen Lastpunkten der beiden Motoren angepasst sind, können möglich sein, um ggf. die Ausgangsspannung beispielsweise eines Wechselrichters und damit die Klemmenspannung für einen Motor (temporär) zu erhöhen. Dadurch ist es möglich, anstelle von zwei H-Brücken mit insgesamt acht Leistungsschaltern nur eine B6-Brücke mit sechs Leistungsschaltern zu verwenden. Der gleichzeitige Betrieb von zwei unabhängig voneinander geregelten einsträngigen Motoren (z.B. SRM-, DC-, PM- oder SynchronMotoren) mit einer gemeinsamen B6-Brücke wird damit möglich.

Die jeweils nur einem Motor zugeordnete Phase des Frequenzumrichters (im Beispiel die Phasen U und W) kann mit einem speziellen PWM-Muster (PWM: Pulsweitenmodulation) angesteuert werden. Hierbei können die Phasenpotentiale so gewählt werden, dass eine bipolare Bestromung des jeweiligen Wicklungsstrangs der einsträngigen Motoren möglich ist. Bei Phasenpotentialen kleiner des Phasenpotentials der gemeinsamen Phase (Beispiel V_V der Phase V) fließt ein negativer Strom, bei Phasenpotentialen größer der gemeinsamen Phase (V_V) fließt ein positiver Strom durch den Wicklungsstrang des jeweiligen 1-strängigen Motors.

Beispielsweise kann die PWM-Generierung der gemeinsam genutzten Phase (Bsp. V_V der Phase V) wie zuvor beschrieben wie folgt erfolgen:

- Erzeugen eines speziellen Pulsmusters der jeweils nur einem Motor zugeordneten Phasen des Frequenzumrichters (Bsp. V_U und V_W der Phasen U und W).

- Die Spannung am jeweiligen Motor (U_Motor1 oder U_Motor2) ist die Differenz aus der jeweils nur einem Motor zugeordneten Phase (V_U oder V_W) und der gemeinsam genutzten Phase (V_V).

$$\text{U\_Motor1} = \text{V\_U} - \text{V\_V} \quad \text{und} \quad \text{U\_Motor2} = \text{V\_W} - \text{V\_V}.$$

Die Schaltzeiten lassen sich dadurch wie folgt berechnen:

- Bei einem Sollwert der Spannung an Motor M1:

$$\text{Ton\_U} = \text{Ton\_V} + \text{Tpwm} * \text{U\_Motor1} / \text{Udc}$$

- Gleiches gilt für Motor M2:

$$Ton\_W = Ton\_V + Tpwm * U\_Motor2 / Udc$$

Dabei gibt Ton die Einschaltzeit vom High-Side Leistungsschalter an.

Der Modulationsgrad des gemeinsamen Brückenzweigs kann so gewählt werden, dass ein mittleres Potential von UDC/2 resultiert. In diesem Fall (Ton_V = Tpwm/2) steht für die Motoren M1 und M2 die gleiche maximale Spannungsgrenze UDC/2 zur Verfügung. Somit kann eine symmetrische Spannungsaufteilung zwischen Motor M1 und M2 erfolgen.

Eine unsymmetrische Verteilung der Spannung an zwei Motoren M1 und M2 kann auch möglich sein, indem ein variables Tastverhältnis im gemeinsamen Brückenzweig V eingeprägt wird. Der Modulationsgrad im gemeinsamen Zweig (Bsp. Phase V) ist in diesem Fall, anders als bei der symmetrischen Verteilung, zeitlich veränderlich. Beliebige Aufteilungen der Zwischenkreisspannung zwischen M1 und M2 können gewählt werden, solange gilt:

$$U\_Motor1\_max + U\_Motor2\_max = Udc.$$

Zum Beispiel:

$$U\_Motor1\_max= 0.7*Udc, \ U\_Motor2\_max = 0.3*Udc$$

$$U\_Motor1\_max= 0.6*Udc, \ U\_Motor2\_max = 0.4*Udc$$

$$U\_Motor1\_max= 1*Udc, \ U\_Motor2\_max = 0$$

(Motor M2 wird nicht betrieben)

Durch die Möglichkeit, einem der beiden Motoren die volle Spannung zur Verfügung zu stellen, kann auch der sequenzielle Betrieb, d.h. der alleinige, bzw. abwechselnde Betrieb eines der beiden Motoren, mit voller, bzw. erhöhter Leistung ermöglicht werden.

Durch die Möglichkeit, einem der beiden Motoren eine höhere Spannung als dem anderen Motor zur Verfügung zu stellen, kann auch der gleichzeitige Betrieb beider Motoren mit unterschiedlichen Leistungen ermöglicht werden. Auch ein kurzfristiger "Boost-Betrieb" eines der beiden Motoren ist denkbar.

Die Wicklungen der Motoren können der geringeren Ausgangsspannung des Wechselrichters, im Vergleich zur klassischen H-Brücke, angepasst werden, d.h. es kann eine Anpassung von Windungszahl und bzw. oder Drahtdurchmesser erfolgen.

Die Regelung, die auf einer Steuerungseinheit bzw. auf einem Rechner (Mikrocontroller) laufen kann, kann zweifach gerechnet werden, da zwei Motoren unabhängig voneinander betrieben werden sollen. Dies gilt auch im Fall von zwei H-Brücken.

Ein Ausführungsbeispiel der Erfindung ist in den Zeichnungen rein schematisch dargestellt und wird nachfolgend näher beschrieben. Es zeigt

Figur 1    ein Schaltungsbild eines bekannten Antriebssystems mit einem Motor und mit einer H-Brücke;

Figur 2    ein Schaltungsbild eines erfindungsgemäßen Antriebssystems mit zwei Motoren und mit zwei H-Brücken mit einer gemeinsamen Halbbrücke; und

Figur 3    Schaltzeiten der drei Halbbrücken eines erfindungsgemäßen Antriebssystems gemäß einer Ausführungsform.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird.

Die geglättete Gleichspannung wird nun als Zwischenkreisspannung parallel an eine erste Halbbrücke 12 und an eine zweite Halbbrücke 13 gelegt, welche gemeinsam eine erste H-Brücke 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf. Zwischen den beiden Halbbrücken 12, 13 ist ein erster Motor M1 angeordnet, welcher von der ersten H-Brücke 15 betrieben werden kann.

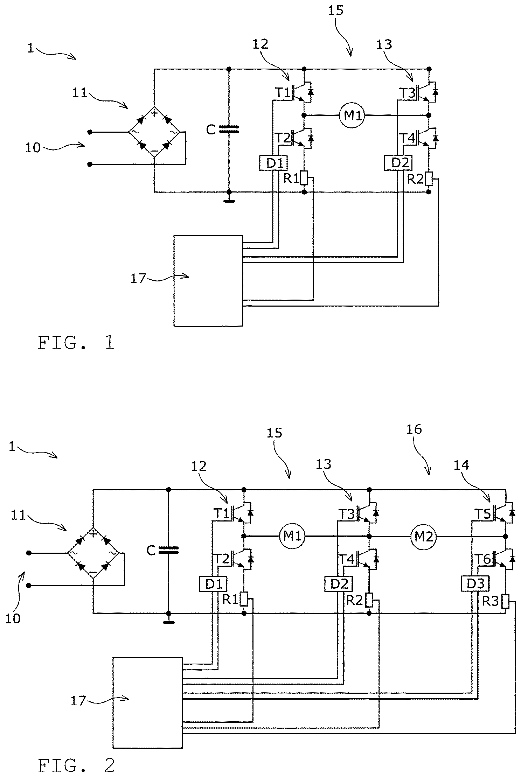

Hierzu ist eine Steuerungseinheit 17 in Form eines Rechners 17 über die beiden Treiber D1, D2 jeweils mit den vier Leistungshalbleitern T1-T4 verbunden. Auch sind die beiden Messwiderstände R1, R2 mit der Steuerungseinheit 17 verbunden, so dass im Betrieb die Ströme im ersten Motor M1 erfasst und der erste Motor M1 hierauf basierend von der Steuerungseinheit 17 geregelt betrieben werden kann, siehe Figur 1. Der erste Motor M1 ist ein einphasiger Wechselstrommotor bzw. ein einphasiger Synchronmotor, welcher beispielsweise in einem Haushaltsgerät wie insbesondere in einer Waschmaschine oder in einem Geschirrspüler als Umflutpumpenmotor oder als Laugenpumpenmotor eingesetzt werden kann.

Um nun den schaltungstechnischen Aufwand zum Betrieb wenigstens eines zweiten Motors M2 in demselben Haushaltsgerät geringzuhalten, ohne die Funktionen bzw. ohne die Nutzungsmöglichkeiten einzuschränken, wird erfindungsgemäß der zweite Motor M2 mit einer zweiten H-Brücke 16 seitens derselben Steuerungseinheit 17 betrieben, wobei die zweite H-Brücke 16 ebenfalls die zweite Halbbrücke 13 und zusätzlich eine weitere dritte Halbbrücke 14 verwendet, welche ihrerseits einen fünften Leistungshalbleiter T5, einen sechsten Leistungshalbleiter T6, einen dritten Treiber D3 und einen dritten Messwiderstand R3 als dritten Shunt R3 aufweist. Entsprechend kann auch der zweite Motor M2 seitens der Steuerungseinheit 17 geregelt, basierend auf den Strömen im Betrieb, betrieben werden.

Die zweite Halbbrücke 13 kann somit zum einen entweder von der ersten H-Brücke 15 zum Betreiben des ersten Motors M1 oder von der zweiten H-Brücke 16 zum Betreiben des zweiten Motors M2 verwendet.

Zum anderen kann die zweite Halbbrücke 13 auch gleichzeitig als Bestandteil beider H-Brücken 15, 16 genutzt bzw. betrieben werden, um beide Motoren M1, M2 gleichzeitig und somit parallel zueinander zu betreiben. Hierzu kann seitens der Steuerungseinheit 17 die zweite Halbbrücke 13 so geschaltet bzw. betrieben werden, dass ein Teil der Zwischenkreisspannung wie beispielsweise die Hälfte über der zweiten Halbbrücke 13 anliegt und somit beiden H-Brücken 15, 16 zur Verfügung gestellt wird. Ferner können die erste Halbbrücke 12 und die dritte Halbbrücke 14 seitens der Steuerungseinheit 17 so geschaltet bzw. betrieben werden, dass dort jeweils eine niedrigere oder höhere Spannung anliegt als über der zweiten Halbbrücke 13, so dass die Wicklungsstränge beider Motoren M1, M2 in unterschiedlichen Stromrichtungen (positiv oder negativ) bestromt werden können. Durch die Variation der Ansteuerung der ersten Halbbrücke 12 und der dritten Halbbrücke 14 seitens der Steuerungseinheit 17 können ferner die Drehzahl und bzw. oder das Drehmoment der beiden Motoren M1, M2 individuell eingestellt werden.

Dadurch, dass in jedem Fall die zweite Halbbrücke 13, entweder alternativ oder gleichzeitig, zum Betrieb beider Motoren M1, M2 genutzt werden kann, kann nicht nur der schaltungstechnische Aufwand zum Betrieb des zweiten Motors M2 geringhalten werden, sondern auch die Herstellungskosten, der Platzbedarf, der Energieverbrauch sowie die Wärmeabgabe des Antriebssystems 1.

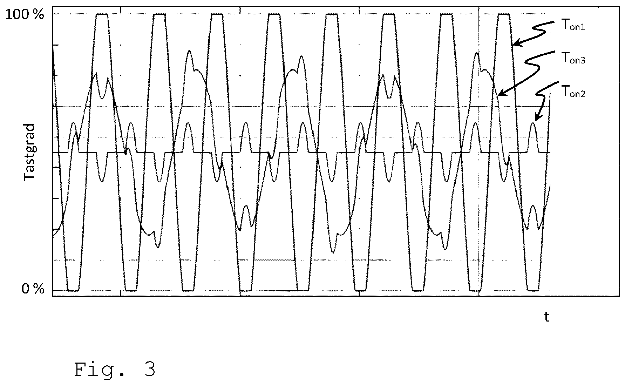

Fig. 3 zeigt eine Ausführungsform mit unsymmetrischer Verteilung der Spannungen U_Motor1_max = 0.7*Udc, U_Motor2_max = 0.3*Udc. Dadurch, dass ein variables Tastverhältnis im gemeinsamen Brückenzweig V eingeprägt wird, kann einem der beiden Motoren eine höhere Spannung als dem anderen Motor zur Verfügung gestellt werden. Die Schaltzeiten der Phasen U, V und W, also der Halbbrücken 12, 13 und 14, sind in Figur 3 schematisch dargestellt ($T_{ON1}$, $T_{ON2}$, $T_{ON3}$). Durch die "Übersteuerung" von Phase U (Halbbrücke 12) ist die Modulation der Phase V (Halbbrücke 13) nicht konstant. Auch auf Phase W (Halbbrücke 14) hat dieser zeitlich nicht konstante Verlauf der Modulation der Phase V (Halbbrücke 13) einen Einfluss. Dies muss bei der Berechnung der Schaltzeiten der Phase W (Halbbrücke 14) berücksichtig, also "kompensiert" werden. Dadurch ergibt sich in Phase W (Halbbrücke 14) ebenfalls ein nicht-sinusförmiger zeitlicher Verlauf der Modulation und damit des Phasenpotentials. In diesem Beispiel wird Phase W (Halbbrücke 14) zudem mit einer geringeren elektrischen Grundfrequenz betrieben.

**Bezugszeichenliste (Bestandteil der Beschreibung)**

| | |
|---|---|
| C | Glättungskondensator |
| D1 | erster Treiber |
| D2 | zweiter Treiber |
| D3 | dritter Treiber |
| M1 | erster Motor |
| M2 | zweiter Motor |
| R1-R3 | Messwiderstände; Shunts |
| T1-T6 | Leistungshalbleiter |

EP 4 199 340 A1

1    Antriebssystem
10   Spannungseingang
11   Gleichrichter
12   erste Halbbrücke
13   zweite Halbbrücke
14   dritte Halbbrücke
15   erste H-Brücke
16   zweite H-Brücke
17   Steuerungseinheit; Rechner

TON1    Schaltzeiten der Halbbrücke 12
TON2    Schaltzeiten der Halbbrücke 13
TON3    Schaltzeiten der Halbbrücke 14

**Patentansprüche**

**1.** Antriebssystem (1)

mit wenigstens einem ersten Motor (M1),
mit wenigstens einer ersten H-Brücke (15), welche ausgebildet ist, den ersten Motor (M1) zu betreiben,
mit wenigstens einem zweiten Motor (M2) und
mit wenigstens einer zweiten H-Brücke (16), welche ausgebildet ist, den zweiten Motor (M2) zu betreiben,
wobei die erste H-Brücke (15) eine erste Halbbrücke (12) und eine zweite Halbbrücke (13) aufweist, und
wobei die zweite H-Brücke (16) die zweite Halbbrücke (13) und eine dritte Halbbrücke (14) aufweist
**dadurch gekennzeichnet, dass**
das Antriebssystem (1), vorzugweise eine Steuerungseinheit (17) des Antriebssystems (1), ausgebildet ist, gleichzeitig

• mittels der ersten Halbbrücke (12) und der zweiten Halbbrücke (13) die erste H-Brücke (15) und
• mittels der zweiten Halbbrücke (13) und der dritten Halbbrücke (14) die zweite H-Brücke (16)

zu betreiben.

**2.** Antriebssystem (1) nach Anspruch 1, **dadurch gekennzeichnet, dass**
das Antriebssystem (1), vorzugweise eine Steuerungseinheit (17) des Antriebssystems (1), ausgebildet ist, die zweite Halbbrücke (13) in der Weise anzusteuern, dass eine Spannung entsteht, welche zwischen 25% und 75%, vorzugsweise etwa 50%, der an der zweiten Halbbrücke (13) anliegenden Zwischenkreisspannung entsteht.

**3.** Antriebssystem (1) nach Anspruch 1 oder 2, **dadurch gekennzeichnet, dass** das Antriebssystem (1), vorzugweise eine Steuerungseinheit (17) des Antriebssystems (1), ausgebildet ist, die erste H-Brücke (15) und die zweite H-Brücke (16) pulsweitenmoduliert zu betreiben,
wobei das Antriebssystem (1), vorzugweise die Steuerungseinheit (17) des Antriebssystems (1), ferner ausgebildet ist, die zweite Halbbrücke (13) mit einem Tastgrad zwischen 25% und 75%, vorzugsweise von etwa 50%, zu betreiben.

**4.** Antriebssystem (1) nach Anspruch 2 oder 3, **dadurch gekennzeichnet, dass**
das Antriebssystem (1), vorzugweise eine Steuerungseinheit (17) des Antriebssystems (1), ausgebildet ist, die erste Halbbrücke (12) und/oder die dritte Halbbrücke (14), vorzugsweise pulsweitenmoduliert, mit einer Spannung zu betreiben, welche sich von der Spannung der zweiten Halbbrücke (13) unterscheidet.

**5.** Antriebssystem (1) nach einem der Ansprüche 2 bis 4, **dadurch gekennzeichnet, dass**
das Antriebssystem (1), vorzugweise eine Steuerungseinheit (17) des Antriebssystems (1), ausgebildet ist, die erste Halbbrücke (12) und/oder die dritte Halbbrücke (14), vorzugsweise pulsweitenmoduliert in der Weise anzusteuern, dass eine Spannung entsteht, welche unterhalb oder oberhalb der Spannung der zweiten Halbbrücke (13) liegt.

**6.** Antriebssystem (1) nach einem der Ansprüche 2 bis 5, **dadurch gekennzeichnet, dass**

das Antriebssystem (1), vorzugweise eine Steuerungseinheit (17) des Antriebssystems (1), ausgebildet ist, die erste H-Brücke (15) und die zweite H-Brücke (16) pulsweitenmoduliert zu betreiben,

wobei das Antriebssystem (1), vorzugweise die Steuerungseinheit (17) des Antriebssystems (1), ferner ausgebildet ist, die zweite Halbbrücke (13) mit einem Tastgrad zu betreiben, so dass die zweite Halbbrücke (13) der ersten H-Brücke (15) und der zweiten H-Brücke (16) die gleiche Spannung zur Verfügung stellt.

7. Antriebssystem (1) nach einem der Ansprüche 2 bis 5, **dadurch gekennzeichnet, dass**

das Antriebssystem (1), vorzugweise eine Steuerungseinheit (17) des Antriebssystems (1), ausgebildet ist, die erste H-Brücke (15) und die zweite H-Brücke (16) pulsweitenmoduliert zu betreiben,

wobei das Antriebssystem (1), vorzugweise die Steuerungseinheit (17) des Antriebssystems (1), ferner ausgebildet ist, die zweite Halbbrücke (13) mit einem Tastgrad zu betreiben, so dass die zweite Halbbrücke (13) der ersten H-Brücke (15) und der zweiten H-Brücke (16) zwei unterschiedliche Spannungen zur Verfügung stellt.

8. Antriebssystem (1) nach einem der vorangehenden Ansprüche, **dadurch gekennzeichnet, dass**
das Antriebssystem (1), vorzugweise eine Steuerungseinheit (17) des Antriebssystems (1), ferner ausgebildet ist, entweder

• mittels der ersten Halbbrücke (12) und der zweiten Halbbrücke (13) die erste H-Brücke (15) oder
• mittels der zweiten Halbbrücke (13) und der dritten Halbbrücke (14) die zweite H-Brücke (16)

zu betreiben.

9. Antriebssystem (1) nach einem der vorangehenden Ansprüche, **gekennzeichnet durch**
eine Steuerungseinheit (17), welche ausgebildet ist, die erste Halbbrücke (12), die zweite Halbbrücke (13) und die dritte Halbbrücke (14) zu betreiben.

10. Antriebssystem (1) nach einem der vorangehenden Ansprüche, **gekennzeichnet durch**
einen Gleichrichter (11), welcher ausgebildet ist, eine Wechselspannung eines Spannungseingangs (10) des Antriebssystems (1) zu erhalten und eine Gleichspannung der ersten Halbbrücke (12), der zweiten Halbbrücke (13) und der dritten Halbbrücke (14) zur Verfügung zu stellen.

11. Antriebssystem (1) nach Anspruch 10, **gekennzeichnet durch**
einen Glättungskondensator (C), welcher ausgebildet ist, die Gleichspannung des Ausgangs des Gleichrichters (11) zu glätten.

12. Antriebssystem (1) nach einem der vorangehenden Ansprüche, **dadurch gekennzeichnet, dass**
der erste Motor (M1) und der zweite Motor (M2) einphasige Wechselstrommotoren (M1, M2), vorzugsweise einphasige Synchronmotoren (M1, M2), sind.

13. Haushaltsgerät, vorzugsweise Waschmaschine oder Geschirrspüler,
mit wenigstens einem Antriebssystem (1) nach einem der vorangehenden Ansprüche.

FIG. 1

FIG. 2

Fig. 3

Europäisches Patentamt
European Patent Office
Office européen des brevets

**EUROPÄISCHER RECHERCHENBERICHT**

Nummer der Anmeldung

EP 22 20 6605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 211352 A1 (APAG ELEKTRONIK AG [CH]) 16. Januar 2020 (2020-01-16) | 1-6,8,9 | INV. H02P5/68 |
| Y | * Absätze [0020] – [0022] * | 10-13 | |
| A | * Abbildungen 4a, 4b, 5 * | 7 | |
| | ----- | | |
| X | DE 10 2017 112485 A1 (MIELE & CIE [DE]) 13. Dezember 2018 (2018-12-13) | 1 | |
| Y | * Abbildung 3 * | 10-13 | |
| | ----- | | |
| X | DE 102 53 007 A1 (BOSCH GMBH ROBERT [DE]) 27. Mai 2004 (2004-05-27) | 1 | |
| Y | * Abbildungen 2, 3, 4 * | 10-13 | |
| | ----- | | |
| X | JP 2003 333895 A (NILES CO LTD) 21. November 2003 (2003-11-21) | 1 | |
| Y | * Zusammenfassung * * Abbildungen 1, 6, 9 * | 10-13 | |
| | ----- | | |
| X | US 2004/257022 A1 (TRIFILO TIMOTHY M [US]) 23. Dezember 2004 (2004-12-23) | 1 | |
| Y | * Absätze [0018], [0019] * * Abbildung 3 * | 10-13 | RECHERCHIERTE SACHGEBIETE (IPC) |
| | ----- | | H02P |
| Y | US 9 979 328 B1 (CHRETIEN LUDOVIC ANDRE [US] ET AL) 22. Mai 2018 (2018-05-22) * Abbildung 2 * | 10,11 | |
| | ----- | | |
| Y | DE 10 2019 110045 A1 (MIELE & CIE [DE]) 22. Oktober 2020 (2020-10-22) * Absätze [0001], [0043], [0044], [0048] * * Abbildungen 1, 3 * | 12,13 | |
| | ----- | | |

Der vorliegende Recherchenbericht wurde für alle Patentansprüche erstellt

| Recherchenort | Abschlußdatum der Recherche | Prüfer |
|---|---|---|
| München | 28. April 2023 | Roider, Anton |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 20 6605

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2023

| Im Recherchenbericht angeführtes Patentdokument | Datum der Veröffentlichung | Mitglied(er) der Patentfamilie | Datum der Veröffentlichung |
|---|---|---|---|
| DE 102018211352 A1 | 16-01-2020 | KEINE | |
| DE 102017112485 A1 | 13-12-2018 | DE 102017112485 A1 | 13-12-2018 |
| | | EP 3413458 A1 | 12-12-2018 |
| DE 10253007 A1 | 27-05-2004 | DE 10253007 A1 | 27-05-2004 |
| | | EP 1583676 A1 | 12-10-2005 |
| | | ES 2311713 T3 | 16-02-2009 |
| | | JP 4358746 B2 | 04-11-2009 |
| | | JP 2006506262 A | 23-02-2006 |
| | | US 2004245954 A1 | 09-12-2004 |
| | | WO 2004043751 A1 | 27-05-2004 |
| JP 2003333895 A | 21-11-2003 | KEINE | |
| US 2004257022 A1 | 23-12-2004 | KEINE | |
| US 9979328 B1 | 22-05-2018 | KEINE | |
| DE 102019110045 A1 | 22-10-2020 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2744095 A1

- DE 102017112485 A1